# EUROPÄISCHE PATENTSCHRIFT

(11) **EP 1 683 261 B1**
(45) Veröffentlichungstag und Bekanntmachung des Hinweises auf die Patenterteilung: **29.12.2010**
(21) Anmeldenummer: 04818141.6
(22) Anmeldetag: 28.10.2004
(51) Int. Cl.: H02P 6/18, G01D 5/20

(54) **VERFAHREN ZUR ERMITTLUNG DER ROTORLAGE EINER SYNCHRONMASCHINE**
METHOD FOR DETERMINING THE ROTOR POSITION OF A SYNCHRONOUS MACHINE
PROCEDE DE DETERMINATION DE LA POSITION DU ROTOR D'UNE MACHINE SYNCHRONE

(30) Priorität: 06.11.2003 DE 10351850
(43) Veröffentlichungstag der Anmeldung: 26.07.2006
(73) Patentinhaber: Continental Teves AG & Co. oHG, 60488 Frankfurt am Main (DE)
(72) Erfinder: STAUDER, Peter, 55128 Mainz (DE); KAUFMANN, Tom, 55595 Winterbach (DE)
(86) Internationale Anmeldenummer: PCT/EP2004/052702
(87) Internationale Veröffentlichungsnummer: WO 2005/046043

(56) Entgegenhaltungen:
- EP-A- 0 793 337
- EP-A- 1 160 966
- AT-B- 395 487

## Beschreibung

Die vorliegende Erfindung betrifft ein Verfahren zur Ermittlung der Rotorlage einer stillstehenden oder sich langsam drehenden Synchronmaschine durch Auswertung von elektrischen Messpulsen, die durch Anlegen von Spannungspulsen an die einzelnen Phasenwicklungen des Stators gewonnen werden, bei dem Änderungen der Induktivität der Phasenwicklungen, die durch die Sättigung des Statoreisens in Abhängigkeit von der Rotorlage verursacht werden, durch Berechnung von Strombetragsdifferenzen von zwei Messpulsen in entgegen gerichteten Stromrichtungen ermittelt werden, wobei den Strombetragsdifferenzen Winkelwerte zugeordnet sind, die durch die Anzahl der Phasenwicklungen vorgegeben sind.

Ein derartiges Verfahren ist z. B. aus der US-Patentschrift US 6,172,498 B1 mit dem Titel "Method and Apparatus for Rotor Angle Detection" bekannt. Bei der Durchführung des bekannten Verfahrens werden an die einzelnen Phasenwicklungen des Stators Messpulse entgegengesetzter Polarität angelegt, aus deren Amplituden Differenzwerte gebildet werden, die zur Bestimmung der allgemeinen Rotorlage und anschließend zur Bestimmung eines Korrekturwertes verwendet werden, mit dem die allgemeine Rotorlage korrigiert wird.

Nachteilig an diesem Verfahren ist, dass der durch die Messpulse verursachte Restmagnetismus des Statoreisens jeweils den folgenden Messpuls beeinflusst, so dass die anfängliche Rotorlage nicht ausreichend genau ermittelt wird, so dass die Messgenauigkeit des Verfahrens erheblich beeinträchtigt wird.

Zur Erhöhung der Genauigkeit bestimmt das Verfahren im Dokument EP0793337 den jeweiligen Rotorlagewinkel aus dem Verhältnis der gleichzeitig gemessenen Stromantworten in den drei Phasen der Synchronmaschine bei Anlegen eines bestimmten Spannungsraumzeigers.

Der Erfindung liegt nun die Aufgabe zugrunde, die Messgenauigkeit des Verfahrens der eingangs genannten Gattung zu erhöhen.

Diese Aufgabe wird nach dem Verfahrens-Anspruch 1 dadurch gelöst, dass vor dem ersten Messpuls ein Vormagnetisierungspuls mit einer gegenüber dem ersten Messpuls entgegen gesetzten Polarität und einer dem ersten Messpuls entsprechenden Einschaltdauer erzeugt wird und dass der jeweils erste, an die entsprechende Phasenwicklung angelegte Messpuls als Vormagnetisierungspuls in der gleichen Phasenwicklung wirkt.

Bei einer vorteilhaften Weiterbildung des erfindungsgemäßen Verfahrens werden bei der Auswertung der Messpulse den Strombetragsdifferenzen zugeordneten Winkelwerten bestimmte Winkeloffsetwerte hinzuaddiert und die so gebildeten Wertepaare mit einer Referenzkennlinie verglichen, wobei die Summe der Quadrate der Vergleichsergebnisse gebildet und zusammen mit dem zugehörigen Winkeloffsetwert in einem Speicher abgelegt wird, wonach das Minimum der Summe ermittelt wird und der zugehörige Winkeloffsetwert als gemessene Rotorlage ausgegeben wird. Durch diese Maßnahme wird eine weitere Erhöhung der Genauigkeit der ermittelten Rotorlage durch die Auswertung der Referenzkennlinie erreicht, die die Eigenschaften einer Referenzmaschine genau abbildet.

Eine andere vorteilhafte Weiterbildung der Erfindung sieht vor, dass die Winkeloffsetwerte auf einen Winkelbereich begrenzt werden, der durch Vorzeichen der ermittelten Strombetragsdifferenzen bestimmt wird. Durch diese Maßnahme wird eine Erhöhung der Auswertungsgeschwindigkeit bzw. Reduktion der erforderlichen Rechenleistung durch Vorauswahl des zu erwartenden Ergebnisses erreicht.

Um eine Erhöhung der Auswertungsgeschwindigkeit bzw. Reduktion der erforderlichen Rechenleistung durch iterative Verfeinerung der Auflösung der zu ermittelnden Rotorlage zu erreichen sieht die Erfindung vor, dass mehrere Auswertungszyklen nacheinander mit kleiner werdenden Abständen zwischen den Winkeloffsetwerten durchgeführt werden.

Um durch aktiven Stromabbau eine Momentenrückwirkung der Messpulse auf die Rotorlage zu minimieren und die Messzeit zu reduzieren ist nach einem weiteren Erfindungsmerkmal vorgesehen, dass ein oder mehrere Kompensationspulse zur Erhöhung des Stromabfallgradienten des Vormagnetisierungssowie der Messpulse erzeugt werden.

Dabei können vorzugsweise zur Erzeugung eines Messpulses zwei oder mehr Phasenwicklungen für eine festgelegte Zeit mit definierten Potentialen verbunden werden oder, insbesondere bei Motoren mit Sternschaltung, eine oder mehrere Phasenwicklungen und der Sternpunkt für eine festgelegte Zeit mit definierten Potentialen verbunden werden. Durch die Gewinnung von weiteren Messpunkten bei zusätzlichen Winkelwerten wird eine wesentliche Verbesserung der Messgenauigkeit erreicht. Ergeben sich durch die zusätzlichen Winkelwerte verschiedene Induktivitäten und Widerstände für die entsprechende Schaltungsanordnung, so muss die Einschaltdauer der Messpulse angepasst werden und/oder die ermittelten Strombetragsdifferenzen mit einem Skalierungsfaktor multipliziert werden.

Um die Genauigkeit der Rotorlagenermittlung durch optimale Ausnutzung des zur Verfügung stehenden Strommessbereichs zu erhöhen sieht die Erfindung vor, dass die festgelegte Zeit in Abhängigkeit von der für die Erzeugung der Messpulse notwendigen, an die Phasenwicklungen angelegten Spannung gewählt wird. Zusätzlich kann die festgelegte Zeit in Abhängigkeit von der Temperatur der Synchronmaschine gewählt werden. Durch diese Maßnahme wird eine weitere Erhöhung der Genauigkeit der ermittelten Rotorlage durch Kompensation der Widerstandsänderung der Phasenwicklungen unter Temperatureinfluss erreicht.

Sollten keine Spannungs- und/oder Temperaturmessungen möglich sein, so wird eine weitere Erhöhung der Messgenauigkeit durch optimale Ausnutzung des zur Verfügung stehenden Strommessbereichs dadurch erreicht, dass die festegelegte Zeit schrittweise so lange verlängert wird, bis eine gewünschte Stromamplitude des Messpulses erreicht ist.

Bei einer anderen, besonders kostengünstig durchführbaren Variante des Verfahrens nach der Erfindung wird die Stromamplitude aller Messpulse mit einem einzigen Messmittel ermittelt. Durch den Wegfall des Messoffsets bei der Differenzenbildung sowie den Wegfall von Skalierungsfehlern bei der Verwendung mehrerer Sensoren wird die Genauigkeit der Rotorlagenermittlung erhöht. Zur Wahl eines für die Rotorlagenermittlung optimalen Strommessbereichs ist nur ein zusätzlicher Sensor notwendig Alternativ kann die Stromamplitude aller Messpulse mit einer Strommesseinrichtung ermittelt werden, die der Synchronmaschine zugeordnet ist, so dass keine zusätzlichen Sensoren notwendig sind.

Um die Genauigkeit der ermittelten Rotorlage durch die Berücksichtigung der gemessenen Rotorlagenänderung während der Messung weiter zu erhöhen sieht eine vorteilhafte Weiterbildung des Erfindungsgegenstandes vor, dass die Änderung der Rotorlage aufgrund der Momentenrückwirkung der Messpulse gemessen wird und in Abhängigkeit davon die den Strombetragsdifferenzen zugeordneten Winkelwerte entsprechend korrigiert werden.

Eine weitere vorteilhafte Weiterbildung des erfindungsgemäßen Verfahrens sieht vor, dass die Referenzkennlinie an die ermittelten Strombetragsdifferenzen angepasst wird. Dadurch erfolgt eine Anpassung der Referenzkennlinie an die Eigenschaften der Synchronmaschine zum Ausgleich von Serienstreuungen bei der Fertigung.

Nach einem anderen vorteilhaften Merkmal der Erfindung wird die an die Phasenwicklungen angelegte Spannung während der Messpulse überwacht und bei einer Abweichung von einer vorgegebenen Toleranz der Messpuls wiederholt. Durch diese Maßnahme werden sämtliche, durch Spannungseinbrüche verfälschten Messpulse verworfen.

Bei einer anderen Variante des erfindungsgemäßen Verfahrens ist vorgesehen, dass während der Einschaltdauer der Messpulse deren Stromamplitude überwacht wird und bei einer Abweichung von einer vorgegebenen Toleranz der Messpuls wiederholt wird. Durch diese Maßnahme werden sämtliche, außerhalb der Toleranz liegenden Messpulse verworfen. Schließlich sieht ein weiteres Erfindungsmerkmal vor, dass das Minimum der Summe der Quadrate der Vergleichsergebnisse als Kriterium der Qualität der Ermittlung der Rotorlage verwendet wird. Durch diese Maßnahme werden sämtliche Rotorlagenwerte verworfen, deren zugrundeliegende Strombetragsdifferenzen zu stark von der abgelegten Referenzkennlinie abweichen.

Zur weiteren Erläuterung der Erfindung wird auf die Zeichnungen Bezug genommen, in denen eine Ausführungsform des erfindungsgemäßen Verfahrens zur Ermittlung der Rotorlage schematisch veranschaulicht ist. In der Zeichnung zeigen:
Fig. 1 ein Blockschaltbild einer Vorrichtung zur Durchführung des gattungsgemäßen Verfahrens,
Fig. 2 ein Diagramm der Abhängigkeit U, I = f(t), das Spannungs- und Strompulse einer idealisierten Einzelmessung bei eine vorteilhaften Ausführungsform des erfindungsgemäßen Verfahrens, und
Fig. 3 ein Diagramm, das die Auswertung der Messpulse darstellt.

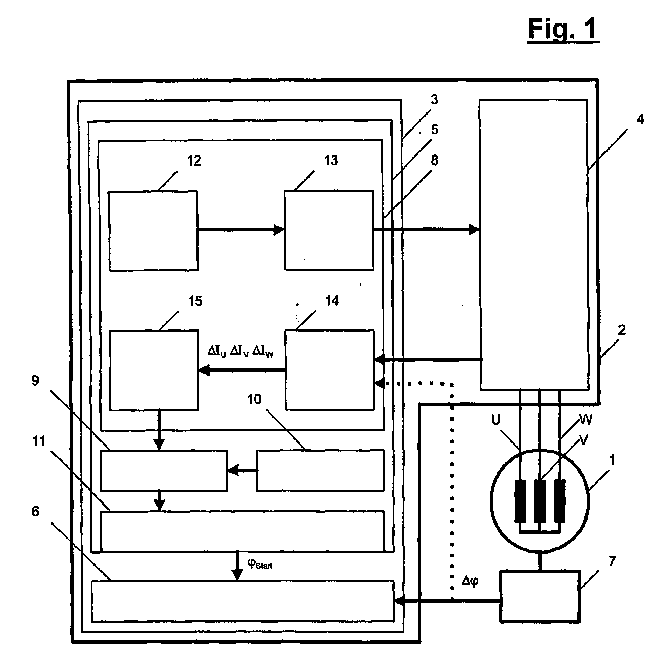

In der Fig. 1 sind mit dem Bezugszeichen 1 eine Synchronmaschine und mit dem Bezugszeichen 2 eine der Synchronmaschine 1 zugeordnete Ansteuerungselektronik bezeichnet. Die Ansteuerungselektronik 2 enthält im Wesentlichen ein Ansteuerungssoftwaremodul 3 sowie eine Leistungsendstufe 4, deren Ausgangs- bzw. Spannungssignale U_{U}, Uv und U_{W} an die Phasenwicklungen U, V und W der Synchronmaschine 1 angelegt werden. Das Ansteuerungssoftware-modul 3 umfasst ein Steuermodul 5 zum Steuern des Ablaufs der Ermittlung der Rotorlage der Synchronmaschine 1 sowie eine Rotorlageerfassungseinrichtung 6, der die Rotorlageänderung der Synchronmaschine 1 repräsentierende Ausgangssignale Δϕ eines relativen Rotorlagesensors 7 zugeführt werden. Das Steuermodul 5 umfasst ein Messwerterfassungsmodul 8, ein Auswertemodul 9, einen Speicher 10, in dem eine Referenzkennlinie der Synchronmaschine 1 abgelegt ist, sowie eine Schnittstelle 11, deren Ausgangssignal der Rotorlageerfassungseinrichtung 6 zugeführt wird. Das Messwerterfassungsmodul 8 besteht im wesentlichen aus einem Testpulsgenerator 12, einer dem Testpulsgenerator 12 nachgeschalteten PWM-Einheit 13, einer Messeinrichtung 14 sowie einem Messwertspeicher 15.

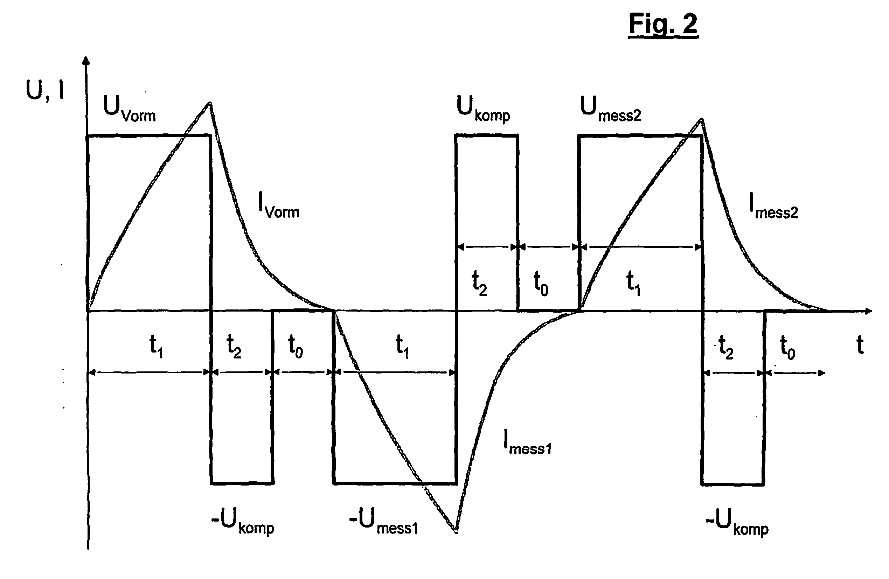

Im nachfolgenden Text wird die Funktionsweise der in Fig. 1 dargestellten Schaltungsanordnung näher erläutert:
Es wird angenommen, dass die Synchronmaschine 1 sich im Stillstand befindet, wobei zunächst die Messung der Strombetragsdifferenz in der Phasenwicklung U durchgeführt wird. Dabei wird an die Phasenwicklung U ein erstes Potential angelegt, während an die Phasenwicklungen V und W ein zweites Potential angelegt werden. Die Einschaltzeit der so entstehenden Spannung wird vom Testpulsgenerator 12 fest gelegt. Die PWM-Einheit 13 setzt die Anforderungen des Testpulsgenerators 12 um, indem sie die Leistungsendstufe 4 so ansteuert, dass die gewünschten Spannungspulse an die Phasenwicklungen U, V, W der Synchronmaschine 1 angelegt werden. Durch das Anlegen des Spannungspulses U_{Vorm} entsteht in der Phasenwicklung U ein Strompuls I_{Vorm}, (s. Fig. 2), der als Vormagnetisierungspuls dient und eine definierte Restmagnetisierung bzw. Remanenz im Statoreisen bewirkt. Um den Stromabbau zu beschleunigen wird vom Testpulsgenerator 12 ein Kompensationsspannungspuls -Uₖₒₘₚ kürzerer Einschaltzeit t₂ und entgegengesetzter Polarität erzeugt. An den Kompensationspuls -Uₖₒₘₚ kann sich eine Wartezeit t₀ anschließen, in der der Strom auf Null abklingt. Als nächstes wird vom Testpulsgenerator 12 ein Spannungspuls - Uₘₑₛₛ₁ mit einer dem vorangegangenen Kompensationspuls -Uₖₒₘₚ entsprechenden Polarität erzeugt, dessen Einschaltzeit der Einschaltzeit t₁ des Spannungspulses U_{Vorm} zur Erzeugung des Vormagnetisierungspulses I_{Vorm} entspricht und der einen ersten Strommesspuls Iₘₑₛₛ₁ erzeugt, dessen Betragsamplitude am Ende des Spannungspulses -Uₘₑₛₛ₁ in der Messeinrichtung 14 ermittelt wird. Zum Stromabbau wird wieder ein Kompensationsspannungspuls Uₖₒₘₚ verwendet. Anschließend wird in gleicher Weise ein zweiter Strommesspuls Iₘₑₛₛ₂ mit entgegengesetzter Polarität erzeugt, dessen Betragsamplitude ebenfalls von der Messeinrichtung 14 erfasst wird. Aus den ermittelten Betragsamplituden wird in der Messeinrichtung 14 eine Strombetragsdifferenz ΔIᵤ gebildet, die mit dem zugehörigen Winkelwert im Messwertspeicher 15 abgelegt wird. Der beschriebene Messvorgang wird auch für die Phasenwicklungen V und W wiederholt.

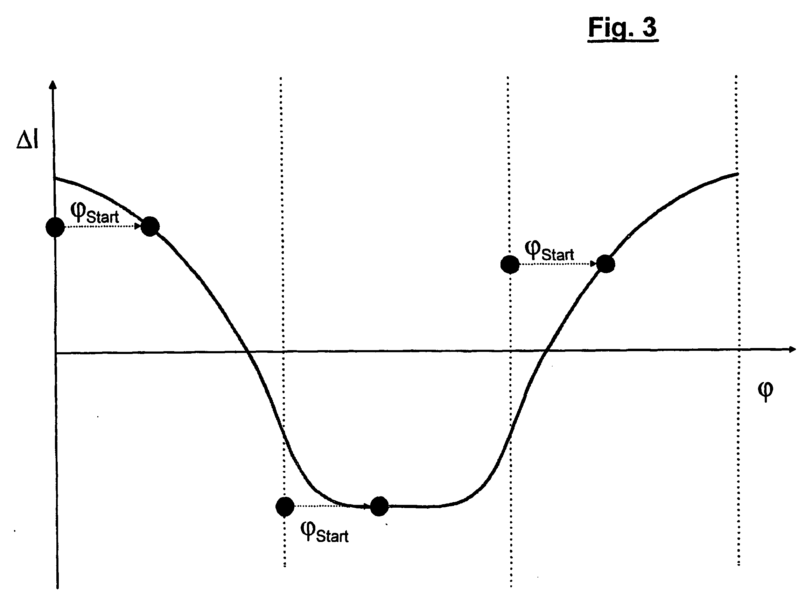

In einem nächsten Schritt werden die aus den Strombetragsdifferenzen ΔI und den zugehörigen Winkelwerten gebildeten Wertepaare dem Auswertemodul 9 zugeführt, in dem sie mit der im Speicher 10 abgelegten Referenzkennlinie verglichen werden. Wie in Fig. 3 dargestellt ist, werden die Wertepaare um einen geeigneten Winkeloffsetwert ϕ_{Start} derart verschoben, dass die Abweichung zur Referenzkennlinie minimal wird. Zu diesem Zweck wird vorzugsweise die an sich bekannte Methode der kleinsten Fehlerquadrate verwendet. Der Winkeloffsetwert ϕ_{Start} wird über die Schnittstelle 11 der Motorlageerfassungseinheit 6 übermittelt und von dieser als Startwinkel der Synchronmaschine 1 genutzt. Für den Betrieb der Synchronmaschine 1 wird von der Motorlageerfassung 6 die Rotorlageänderung Δϕ fortlaufend zu dem Startwinkel ϕ_{Start} hinzuaddiert.

## Patentansprüche

1. Verfahren zur Ermittlung der Rotorlage einer stillstehenden oder sich langsam drehenden Synchronmaschine durch Auswertung von elektrischen Messpulsen, die durch Anlegen von Spannungspulsen an die einzelnen Phasenwicklungen des Stators gewonnen werden, bei dem Änderungen der Induktivität der Phasenwicklungen, die durch die Sättigung des Statoreisens in Abhängigkeit von der Rotorlage verursacht werden, durch Berechnung von Strombetragsdifferenzen von zwei Messpulsen in entgegen gerichteten Stromrichtungen ermittelt werden, wobei den Strombetragsdifferenzen Winkelwerte zugeordnet sind, die durch die Anzahl der Phasenwicklungen vorgegeben sind, **dadurch gekennzeichnet, dass** in jeder Phasenwicklung im Rahmen eines wiederholten Messvorhangs jeweils wei Messpulse (Iₘₑₛₛ₁, Iₘₑₛₛ₂) mit entgegen gerichteter Stromrichtung erzeugt werden und dass jeweils vor dem ersten Messpuls Iₘₑₛₛ₁ ein Vormagnetisierungspuls I_{Vorm} mit einer gegenüber dem ersten Messpuls Iₘₑₛₛ₁ entgegen gesetzten Polarität erzeugt wird, wobei die Einschaltzeiten t₁ der zugehörigen Spannungspulse U_{Vorm} und -Uₘₑₛₛ₁ gleich sind, und dass der jeweils erste, in der entsprechenden Phasenwicklung (U, V, W) erzeugte Messpuls Iₘₑₛₛ₁ als Vormagnetisierungspuls in der gleichen Phasenwicklung (U, V, W) wirkt.

2. Verfahren nach Anspruch 1 **dadurch gekennzeichnet, dass** bei der Auswertung der Messpulse Iₘₑₛₛ den den Strombetragsdifferenzen ΔI zugeordneten Winkelwerten bestimmte Winkeloffsetwerte hinzuaddiert werden und die so gebildeten Wertepaare mit einer Referenzkennlinie verglichen werden, wobei die Summe der Quadrate der Vergleichsergebnisse gebildet und zusammen mit dem zugehörigen Winkeloffsetwert in einem Speicher abgelegt wird, wonach das Minimum der Summe ermittelt wird und der zugehörige Winkeloffsetwert ϕ_{Stact} als gemessene Rotorlage ausgegeben wird.

3. Verfahren nach Anspruch 2 **dadurch gekennzeichnet, dass** die Winkeloffsetwerte auf einen Winkelbereich begrenzt werden, der durch die Auswertung der Vorzeichen der ermittelten Strombetragsdifferenzen bestimmt wird.

4. Verfahren nach Anspruch 2 oder 3 **dadurch gekennzeichnet, dass** mehrere Auswertungszyklen nacheinander mit kleiner werdenden Abständen zwischen den Winkelwerten durchgeführt werden.

5. Verfahren nach einem der Ansprüche 1 bis 4 **dadurch gekennzeichnet, dass** ein oder mehrere Kompensationspulse Uₖₒₘₚ zur Erhöhung des Stromabfallgradienten des Vormagnetisierungspulses I_{Vorm} sowie der Messpulse Iₘₑₛₛ erzeugt werden.

6. Verfahren nach einem der Ansprüche 1 bis 5 **dadurch gekennzeichnet, dass** zur Erzeugung eines Messpulses Iₘₑₛₛ zwei oder mehr Phasenwicklungen für eine festgelegte Zeit t₁ mit definierten Potentialen verbunden werden.

7. Verfahren nach einem der Ansprüche 1 bis 5 **dadurch gekennzeichnet, dass** zur Erzeugung eines Messpulses Iₘₑₛₛ bei Motoren mit Sternschaltung eine oder mehrere Phasenwicklungen und der Sternpunkt für eine festgelegte Zeit t₁ mit definierten Potentialen verbunden werden.

8. Verfahren nach Anspruch 6 oder 7 **dadurch gekennzeichnet, dass** die festgelegte Zeit t₁ in Abhängigkeit von der für die Erzeugung der Messpulse Iₘₑₛₛ notwendigen, an die Phasenwicklungen angelegten Spannung Uₘₑₛₛ gewählt wird.

9. Verfahren nach Anspruch 8 **dadurch gekennzeichnet, dass** die festgelegte Zeit t₁ in Abhängigkeit von der Temperatur der Synchronmaschine 1 gewählt wird.

10. Verfahren nach einem der Ansprüche 6 bis 9 **dadurch gekennzeichnet, dass** die festegelegte Zeit t₁ schrittweise so lange verlängert wird, bis eine gewünschte Stromamplitude des Messpulses Iₘₑₛₛ erreicht ist.

11. Verfahren nach einem der Ansprüche 1 bis 10 **dadurch gekennzeichnet, dass** die Stromamplitude aller Messpulse Iₘₑₛₛ mit einem einzigen Messmittel ermittelt wird.

12. Verfahren nach einem der Ansprüche 1 bis 10 **dadurch gekennzeichnet, dass** der Synchronmaschine 1 eine Strommesseinrichtung zugeordnet ist, mit der die Stromamplitude aller Messpulse Iₘₑₛₛ ermittelt wird.

13. Verfahren nach einem der Ansprüche 5 bis 12 **dadurch gekennzeichnet, dass** die Änderung der Rotorlage. aufgrund der Momentenrückwirkung der Messpulse Iₘₑₛₛ gemessen wird und in Abhängigkeit davon die den Strombetragsdifferenzen zugeordneten Winkelwerte entsprechend korrigiert werden.

14. Verfahren nach einem der Ansprüche 2 bis 13 **dadurch gekennzeichnet, dass** die Referenzkennlinie an die ermittelten Strombetragsdifferenzen angepasst wird.

15. Verfahren nach einem der Ansprüche 1 bis 14 **dadurch gekennzeichnet, dass** die an die Phasenwicklungen angelegte Spannung während der Einschaltdauer t₁ der Spannungspulse Uₘₑₛₛ überwacht wird und bei einer Abweichung von einer vorgegebenen Toleranz der Messpuls Iₘₑₛₛ wiederholt wird.

16. Verfahren nach einem der Ansprüche 1 bis 15 **dadurch gekennzeichnet, dass** während der Einschaltdauer t₁ der Spannungspulse Uₘₑₛₛ deren Stromamplitude Iₘₑₛₛ überwacht wird und bei einer Abweichung von einer vorgegebenen Toleranz der Messpuls Iₘₑₛₛ wiederholt wird.

17. Verfahren nach einem der Ansprüche 2 bis 16 **dadurch gekennzeichnet, dass** das Minimum der Summe der Quadrate der Vergleichsergebnisse als Kriterium der Qualität der Ermittlung der Rotorlage verwendet wird.

## Claims

1. Method for determining the rotor position of a stationary or slowly rotating synchronous machine by evaluation of electrical measurement pulses, which are obtained by applying voltage pulses to the individual phase windings of the stator, in which changes in the inductance of the phase windings which are caused by the saturation of the stator core depending on the rotor position are determined by calculating differences in the absolute current value of two measurement pulses in opposite directions of flow, with angle values being assigned to the differences in absolute current value, which angle values are predetermined by the number of phase windings, **characterized in that** in each case two measurement pulses (Iₘₑₐₛ₁, Iₘₑₐₛ₂) with opposite directions of flow are produced in each phase winding, as part of a repeated measurement operation, and **in that** a premagnetization pulse Iₚᵣₑₘ with a polarity which is opposite that of the first measurement pulse Iₘₑₐₛ₁ is produced in each case prior to the first measurement pulse Iₘₑₐₛ₁, the switch-on times t₁ of the associated voltage pulses Uₚᵣₑₘ and -Uₘₑₐₛ₁ being equal, and **in that** the respective first measurement pulse Iₘₑₐₛ₁ produced in the corresponding phase winding (U, V, W) acts as premagnetization pulse in the same phase winding (U, V, W).

2. Method according to Claim 1, **characterized in that**, during the evaluation of the measurement pulses Iₘₑₐₛ, specific angle offset values are added to the angle values assigned to the differences in absolute current value ΔI and the value pairs thus formed are compared with a reference characteristic, the sum of the squares of the comparison results being formed and stored, together with the associated angle offset value, in a memory, whereupon the minimum of the sum is determined and the associated angle offset value ϕₛₜₐᵣₜ is output as the measured rotor position.

3. Method according to Claim 2, **characterized in that** the angle offset values are limited to an angle range which is specified by the evaluation of the mathematical sign of the differences in absolute current value determined.

4. Method according to Claim 2 or 3, **characterized in that** a plurality of evaluation cycles are performed successively with decreasing intervals between the angle values.

5. Method according to one of Claims 1 to 4, **characterized in that** one or more compensation pulses U_{comp} are produced for increasing the current drop gradient of the premagnetization pulse Iₚᵣₑₘ and the measurement pulses Iₘₑₐₛ.

6. Method according to one of Claims 1 to 5, **characterized in that**, in order to produce a measurement pulse Iₘₑₐₛ, two or more phase windings are connected to defined potentials for a fixed time t₁.

7. Method according to one of Claims 1 to 5, **characterized in that**, in order to produce a measurement pulse Iₘₑₐₛ in star-connected motors, one or more phase windings and the neutral point are connected to defined potentials for a fixed time t₁.

8. Method according to Claim 6 or 7, **characterized in that** the fixed time t₁ is selected depending on the voltage Uₘₑₐₛ which is required for producing the measurement pulses Iₘₑₐₛ and is applied to the phase windings.

9. Method according to Claim 8, **characterized in that** the fixed time t₁ is selected depending on the temperature of the synchronous machine 1.

10. Method according to one of Claims 6 to 9, **characterized in that** the fixed time t₁ is extended stepwise until a desired current amplitude of the measurement pulse Iₘₑₐₛ is reached.

11. Method according to one of Claims 1 to 10, **characterized in that** the current amplitude of all of the measurement pulses Iₘₑₐₛ is determined by a single measuring instrument.

12. Method according to one of Claims 1 to 10, **characterized in that** a current measuring device is assigned to the synchronous machine 1 and is used to determine the current amplitude of all of the measurement pulses Iₘₑₐₛ.

13. Method according to one of Claims 5 to 12, **characterized in that** the change in the rotor position on the basis of the torque reaction of the measurement pulses Iₘₑₐₛ is measured, and the angle values assigned to the differences in absolute current value are correspondingly corrected depending on said change.

14. Method according to one of Claims 2 to 13, **characterized in that** the reference characteristic is matched to the determined differences in absolute current value.

15. Method according to one of Claims 1 to 14, **characterized in that** the voltage applied to the phase windings is monitored during the switch-on duration t₁ of the voltage pulses Uₘₑₐₛ and the measurement pulse Iₘₑₐₛ is repeated in the event of a discrepancy in relation to a predetermined tolerance.

16. Method according to one of Claims 1 to 15, **characterized in that**, during the switch-on duration t₁ of the voltage pulses Uₘₑₐₛ, the current amplitude Iₘₑₐₛ thereof is monitored and the measurement pulse Iₘₑₐₛ is repeated in the event of a discrepancy in relation to a predetermined tolerance.

17. Method according to one of Claims 2 to 16, **characterized in that** the minimum of the sum of the squares of the comparison results is used as a criterion for the quality of the determination of the rotor position.

## Revendications

1. Procédé de détermination de la position du rotor d'une machine synchrone à l'arrêt ou tournant lentement, par évaluation d'impulsions électriques de mesure qui sont obtenues en appliquant des impulsions de tension sur les différents enroulements de phases du stator, et dans lequel des modifications de l'inductance des enroulements de phases provoquées par la saturation du fer du stator en fonction de la position du rotor sont déterminées par calcul des différences de niveau du courant de deux impulsions de mesure dans des directions de courant opposées, des valeurs angulaires étant associées aux différences de niveau du courant et étant prédéterminées par le nombre des enroulements de phases,
**caractérisé en ce que**
au cours d'une opération répétée de mesure, deux impulsions de mesure (Iₘₑₛₛ₁, Iₘₑₛₛ₂) sont produites dans chaque enroulement de phase dans des directions de courant opposées,
**en ce qu'**avant la première impulsion de mesure Iₘₑₛₛ₁, une impulsion Iᵥₒᵣₘ de pré-magnétisation dont la polarité est opposée à celle de la première impulsion de mesure Iₘₑₛₛ₁ est produite,
**en ce que** les durées de branchement t₁ des impulsions de tension Uᵥₒᵣₘ et -Uₘₑₛₛ₁ associées sont identiques et
**en ce que** la première impulsion de mesure Iₘₑₛₛ₁ produite dans l'enroulement de phase (U, V, W) correspondant agit comme impulsion de pré-magnétisation dans le même enroulement de phase (U, V, W).

2. Procédé selon la revendication 1, **caractérisé en ce que** lors de l'évaluation des impulsions de mesure Iₘₑₛₛ, des valeurs de décalage angulaire définies sont ajoutées aux valeurs angulaires associées aux différences ΔI de niveau de courant et les paires de valeurs ainsi formées sont comparées à une ligne caractéristique de référence et **en ce que** la somme des carrés des résultats de la comparaison est formée et est placée dans une mémoire en même temps que la valeur associée de décalage angulaire, suite à quoi le minimum de la somme est déterminé et la valeur associée ϕₛₜₐᵣₜ de décalage angulaire est délivrée comme position mesurée du rotor.

3. Procédé selon la revendication 2, **caractérisé en ce que** les valeurs de décalage angulaire sont limitées à une plage angulaire définie par l'évaluation du signe des différences de niveau de courant qui ont été déterminées.

4. Procédé selon les revendications 2 ou 3, **caractérisé en ce que** plusieurs cycles d'évaluation sont exécutés successivement à des écarts décroissants entre les valeurs angulaires.

5. procédé selon l'une des revendications 1 à 4, **caractérisé en ce qu'**une ou plusieurs impulsions de compensation Uₖₒₘₚ sont produites pour augmenter le gradient de diminution de courant de l'impulsion de pré-magnétisation Iᵥₒᵣₘ ainsi que des impulsions de mesure Iₘₑₛₛ.

6. Procédé selon l'une des revendications 1 à 5, **caractérisé en ce que** pour former une impulsion de mesure Iₘₑₛₛ, deux ou plusieurs enroulements de phase sont raccordés à des potentiels définis pendant une durée t₁ définie.

7. Procédé selon l'une des revendications 1 à 5, **caractérisé en ce que** pour former une impulsion de mesure Iₘₑₛₛ sur des moteurs raccordés en étoile, un ou plusieurs enroulements de phase et le point d'étoile sont reliés à des potentiels définis pendant une durée t₁ définie.

8. Procédé selon les revendications 6 ou 7, **caractérisé en ce que** la durée t₁ définie est sélectionnée en fonction de la tension Uₘₑₛₛ appliquée sur les enroulements de phase et nécessaire pour former les impulsions de mesure Iₘₑₛₛ.

9. Procédé selon la revendication 8, **caractérisé en ce que** la durée t₁ définie est sélectionnée en fonction de la température de la machine synchrone (1).

10. Procédé selon l'une des revendications 6 à 9, **caractérisé en ce que** la durée t₁ définie est prolongée par pas jusqu'à atteindre une amplitude de courant souhaitée de l'impulsion de mesure Iₘₑₛₛ.

11. Procédé selon l'une des revendications 1 à 10, **caractérisé en que** l'amplitude du courant de toutes les impulsions de mesure Iₘₑₛₛ est déterminée au moyen d'un unique moyen de mesure.

12. Procédé selon l'une des revendications 1 à 10, **caractérisé en ce qu'**un dispositif de mesure de courant par lequel l'amplitude du courant de toutes les impulsions de mesure Iₘₑₛₛ est déterminée est associé à la machine synchrone (1).

13. Procédé selon l'une des revendications 5 à 12, **caractérisé en ce que** la modification de la position du rotor est mesurée sur base de la rétroaction des impulsions de mesure Iₘₑₛₛ sur le couple et **en ce qu'**en fonction de cela, les valeurs angulaires associées aux différences de niveau de courant sont corrigées de manière appropriée.

14. Procédé selon l'une des revendications 2 à 13, **caractérisé en ce que** la ligne caractéristique de référence est adaptée aux différences de niveau de courant qui ont été déterminées.

15. Procédé selon l'une des revendications 1 à 14, **caractérisé en ce que** la tension appliquée sur les enroulements de phase est surveillée pendant la durée de branchement t₁ des impulsions de tension Uₘₑₛₛ et **en ce que** l'impulsion de mesure Iₘₑₛₛ est répétée si une tolérance prédéterminée n'est pas respectée.

16. Procédé selon l'une des revendications 1 à 15, **caractérisé en ce que** pendant la durée de branchement t₁ de l'impulsion de tension Uₘₑₛₛ, son amplitude en courant Iₘₑₛₛ est surveillée et **en ce que** l'impulsion de mesure Iₘₑₛₛ est répétée si une tolérance prédéterminée n'est pas respectée.

17. Procédé selon l'une des revendications 2 à 16, **caractérisé en ce que** le minimum de la somme des carrés des résultats de la comparaison est utilisé comme critère de qualité de la détermination de la position du rotor.
